# EUROPÄISCHE PATENTSCHRIFT

(11) **EP 1 733 937 B1**
(45) Veröffentlichungstag und Bekanntmachung des Hinweises auf die Patenterteilung: **06.08.2008**
(21) Anmeldenummer: 06009616.1
(22) Anmeldetag: 10.05.2006
(51) Int. Cl.: B60R 25/00, G07C 9/00, E05F 15/12

(54) **Verfahren zum automatischen Öffnen eines Elements eines Kraftfahrzeugs**
Automatic opening method for a vehicle closure
Procédé d'ouverture automatique pour un ouvrant d'un véhicule

(30) Priorität: 13.06.2005 DE 102005027249; 05.04.2006 DE 102006015930
(43) Veröffentlichungstag der Anmeldung: 20.12.2006
(73) Patentinhaber: Volkswagen Aktiengesellschaft, 38436 Wolfsburg (DE)
(72) Erfinder: Wick, Christian, 38162 Cremlingen (DE); Grave, Dietmar, 38116 Braunschweig (DE); Grossmann, Markus, 38518 Gifhorn (DE)

(56) Entgegenhaltungen:
- EP-A- 1 429 300
- DE-A1- 10 106 400

## Beschreibung

Die Erfindung betrifft ein Verfahren zum automatischen Öffnen eines Elements eines Kraftfahrzeugs, bei dem eine Zugangskontrolle zum Kraftfahrzeug drahtlos zwischen einem tragbaren Codegeber und einer Sende-/Empfangseinheit im Kraftfahrzeug durchgeführt wird.

Aus der DE 100 38 803 A1 ist ein System zum Öffnen von Türen oder einer Heckklappe eines Kraftfahrzeugs mittels einer Funkfernbedienung bekannt. Das System umfasst einen tragbaren Transponder zum Senden eines Funksignals mit einem dem Kraftfahrzeug zugeordneten und in der Funkverbindung gespeicherten Code. Das Öffnen einer Tür oder der Heckklappe wird durch eine Kombination des Funksignals des tragbaren Transponders und einem Sprachsignal, der sich dem Kraftfahrzeug nähernden Person bewirkt. Das bekannte System ist relativ aufwendig konzipiert und erfordert eine relativ komplexe und teuere Sensorik sowohl zur Funksignal- als auch zur Sprachsignalerfassung.

Aus der EP 0 770 749 B1 ist ein handfreies System zum Entriegeln und/oder Öffnen einer Türe oder einer Heckklappe eines Kraftfahrzeugs bekannt. Ein Entriegeln und/oder Öffnen wird dann bewirkt, wenn ein tragbarer Transponder in unmittelbarer Nähe einer Antenne oder mehreren Antennen des Systems dargeboten wird. Zur Feststellung, ob eine Person in der Nähe der zu öffnenden Türe oder der Heckklappe positioniert ist, werden zusätzlich Ultraschallsensoren angeordnet. Auch dieses System ist somit sehr aufwendig und komplex konzipiert und erfordert eine Vielzahl an Hardwarekomponenten, um eine Überprüfung aller Kriterien zum Öffnen und/oder Entriegeln durchführen zu können.

Des Weiteren ist aus der WO 2004/100081A1 ein System zum Öffnen einer Klappe eines Kraftfahrzeugs bekannt, bei welchem zusätzlich zu einem tragbaren Codegeber, mit dem drahtlos ein berechtigter Zugang zum Kraftfahrzeug überprüft werden kann, ein weiterer Transponder erforderlich ist, welcher in einen Feldstärkebereich um das Kraftfahrzeug gebracht werden muss und welcher durch Betätigen ein Signal aussendet, welches ein Öffnen der Klappe bewirkt.

Ferner ist aus der DE 199 12 319 C1 eine elektronische Schließanlage für ein Kraftfahrzeug bekannt, mit der ver- und entriegelbare Schließeinheiten betätigbar sind. Die Schließanlage umfasst ein zum Zugang zum Kraftfahrzeug berechtigendes tragbares Authentikationselement; wobei ver- und entriegelbare Schließsteuerbefehle durch Schließsteuermittel in Abhängigkeit davon erzeugt werden, in welcher erkannten Außenerfassungszone sich das Authentikationselement befindet. Ein Schließsteuerbefehl wird somit bereits dann erzeugt, sobald sich das Authentikationselement in einer diesem Schließsteuerbefehl zugeordneten Außenerfassungszone befindet. Dadurch können jedoch erhebliche Sicherheitsmängel und Fehlfunktionen auftreten, da bereits dann ein entsprechender Schließsteuerbefehl erzeugt wird, wenn das Authentikationselement in der entsprechenden Zone ist, unabhängig davon ob dies erwünscht ist oder nicht. Somit kann es auch zu unerwünschtem oder sogar zu nicht bemerktem Öffnen von Türen oder Klappen am Kraftfahrzeug kommen.

Bei modernen Kraftfahrzeugen, welche mit Keyless-Go- bzw. Keyless-Entry-Systemen ausgebildet sind, kann somit durch die drahtlose Übertragung von elektrischen Signalen überprüft werden, ob ein Fahrzeugnutzer mit einem tragbaren Codegeber zum Zugang des Kraftfahrzeugs berechtigt ist oder nicht. Falls ein Fahrzeugnutzer einen zum Zugang berechtigenden tragbaren Codegeber bei sich führt, beispielsweise in der Hand hält oder in einer Jacken- oder Hosentasche mit sich führt, öffnet sich eine Fahrzeugtür des Kraftfahrzeugs automatisch und der Fahrzeugnutzer kann in das Kraftfahrzeug einsteigen. Vor allen Dingen dann, wenn ein Fahrzeugnutzer gehindert ist, mit zumindest einer freien Hand die Türen oder eine Heckklappe direkt zu öffnen oder durch Betätigen eines elektrischen Öffnungsmechanismus zu öffnen, beispielsweise dann, wenn er an beiden Händen Gegenstände, wie beispielsweise Einkaufstüten, hält, kann ein einfaches und schnelles Öffnen der Heckklappe oder anderer automatisch zu öffnenden Elemente nicht oder nur sehr aufwendig durchgeführt werden. In derartigen Fällen ist es somit erforderlich, dass ein Fahrzeugnutzer zumindest eine Hand freimacht und dadurch entweder bspw. die Heckklappe öffnet oder einen elektrischen Mechanismus betätigt, durch den die Heckklappe geöffnet werden kann. Diese Vorgehensweise ist jedoch umständlich und für einen Fahrzeugnutzer unbequem sowie auch relativ zeitaufwendig.

Das Dokument EP-A-1429300 offenbart ein Verfahren gemäß dem Oberbegriff des Anspruchs 1.

Daher ist es Aufgabe der vorliegenden Erfindung, ein Verfahren zum automatischen Öffnen eines Elements eines Kraftfahrzeugs zu schaffen, bei dem das Öffnen des Elements ohne aktives Betätigen des Elements durch den Fahrzeugnutzer direkt oder ohne ein aktives Betätigen eines elektronischen Öffnungsmechanismus durch den Fahrzeugnutzer, insbesondere durch eine freie Hand des Fahrzeugnutzers, durchgeführt werden kann.

Diese Aufgabe wird durch ein Verfahren, welches die Merkmale nach Patentanspruch 1 aufweist, gelöst. Bei einem erfindungsgemäßen Verfahren zum automatischen Öffnen eines Elements eines Kraftfahrzeugs wird eine zum Zugang zum Kraftfahrzeug berechtigende Zugangskontrolle drahtlos zwischen einem tragbaren Codegeber und einer Sende-/Empfangseinheit im Kraftfahrzeug durchgeführt. Ein wesentlicher Gedanke der Erfindung besteht darin, dass durch die Sende-/Empfangseinheit ein elektrischer Feldstärkebereich um einen Bereich des Elements des Kraftfahrzeugs zumindest während des Vorgangs zum automatischen Öffnen des Elements erzeugt wird, wobei das Element dann automatisch geöffnet wird, wenn der zum Zugang zum Kraftfahrzeug berechtigende tragbare Codegeber zumindest zeitweise in den elektrischen Feldstärkebereich befördert wird und der tragbare Codegeber zumindest eine vorgebbare Positionsänderung durchführt, welche durch die Sende-/Empfangseinheit detektiert wird, wobei die vorgebbare Positionsänderung einer das automatische Öffnen des Elements berechtigenden Positionsänderung entspricht. Des Weiteren wird das Element auch dann automatisch geöffnet, wenn der zum Zugang zum Kraftfahrzeug berechtigende tragbare Codegeber zumindest für eine vorgebbare Zeitdauer in dem elektrischen Feldstärkebereich verweilt, ohne seine Position zu verändern, wobei die Unveränderlichkeit der Position des tragbaren Codegebers wiederum durch die Sende-/Empfangseinheit detektiert wird. In dieser weiteren Alternative im Hinblick auf ein automatisches Öffnen des Elements erfolgt dieses somit dann, wenn der tragbare Codegeber innerhalb des elektrischen Feldstärkebereichs im Wesentlichen still steht und somit im Wesentlichen keine Positionsänderung durchführt. Durch das erfindungsgemäße Verfahren kann somit erreicht werden, dass bei schlüssellosen Zugangssystemen, wie sie durch Keyless-Go- oder Keyless-Entry-Systeme ausgebildet sind, auch das automatische Öffnen eines Elements eines Kraftfahrzeugs aufwandsarm und schnell durchgeführt werden kann. Insbesondere kann dadurch erreicht werden, dass das Öffnen des Elements ohne ein aktives Betätigen des Elements oder elektrischer Systeme zum Öffnen des Elements durch einen Fahrzeugnutzer ermöglicht werden kann. Auch dann, wenn somit ein Fahrzeugnutzer keine Möglichkeit hat mit zumindest einer seiner beiden Hände das Öffnen des Elements zu bewirken oder einzuleiten, kann durch die Erfindung das bequeme Öffnen des Elements sicher und zuverlässig gewährleistet werden.

In vorteilhafter Weise wird die zumindest eine Positionsänderung des tragbaren Codegebers vollständig in einem derartigen Bereich durchgeführt, welcher durch den elektrischen Feldstärkebereich vollständig abgedeckt wird. Durch die Erfindung kann somit ermöglicht werden, dass einerseits die Kriterien, welche erfüllt sein müssen, dass ein automatisches Öffnen des Elements durchgeführt wird, zumindest ein zeitweises Verweilen bzw. Befördern des tragbaren Codegebers in den elektrischen Feldstärkebereich erfordern, wobei dabei die Positionsänderung derart erfolgen kann, dass die Endposition des tragbaren Codegebers wieder außerhalb des elektrischen Feldstärkebereichs liegt. Es kann andererseits jedoch auch gemäß obiger Ausführungen ermöglicht werden, dass ausgehend von einer Anfangsposition des tragbaren Codegebers innerhalb des elektrischen Feldstärkebereichs eine Positionsänderung derart durchgeführt wird, dass auch die Endposition des tragbaren Codegebers innerhalb des elektrischen Feldstärkebereichs liegt. Die vorgebbaren Kriterien, welche ein automatisches Öffnen des Elements ermöglichen, können durch die Erfindung in variabler und vielfältiger Weise vorgegeben und kombiniert werden und situationsabhängig und/oder kraftfahrzeugabhängig konzipiert werden.

In vorteilhafter Weise wird der elektrische Feldstärkebereich in zumindest zwei unterschiedliche Feldstärkezonen aufgeteilt, wobei der tragbare Codegeber zum berechtigten automatischen Öffnen des Elements in jedem der zumindest zwei Feldstärkezonen positioniert wird. Bevorzugt werden die zumindest zwei unterschiedlichen Feldstärkezonen derart charakterisiert, dass Sie jeweils ein Intervall mit verschiedenen Feldstärkewerten aufweisen. Die Intervalle der beiden Feldstärkezonen können dabei teilweise überlappen.

In vorteilhafter Weise wird die Reihenfolge, in der der tragbare Codegeber in den zumindest zwei unterschiedlichen Feldstärkezonen positioniert wird, vorgegeben. Dadurch kann ein Kriterium zum automatischen Öffnen eines Elements generiert werden, welches sowohl einfach realisiert werden kann und durch einen Fahrzeugnutzer, welcher den tragbaren Codegeber beispielsweise in einer Jackentasche oder einer Hosentasche mit sich trägt, in bequemer und schneller Weise durchgeführt werden. Der Fahrzeugnutzer muss in einem derartigen Fall die zumindest zwei unterschiedlichen Feldstärkezonen lediglich in der vorgegebenen Reihenfolge durchwandern, um ein automatisches Öffnen eines Elements des Kraftfahrzeugs erreichen zu können.

In vorteilhafter Weise wird das automatische Öffnen des Elements abhängig von einer vorgebbaren Verweildauer des tragbaren Codegebers innerhalb des elektrischen Feldstärkebereichs durchgeführt. Es kann dabei vorgesehen sein, dass dazu lediglich erforderlich ist, dass der tragbare Codegeber innerhalb des elektrischen Feldstärkebereichs ohne Unterbrechung positioniert wird. Es kann auch vorgesehen sein, dass das automatische Öffnen des Elements abhängig von einer vorgebbaren Verweildauer des tragbaren Codegebers innerhalb zumindest einer der zumindest zwei unterschiedlichen Feldstärkezonen durchgeführt wird. Es kann somit ein Kriterium zum automatischen Öffnen des Elements des Kraftfahrzeugs dahingehend festgelegt werden, dass der tragbare Codegeber in einer ersten Feldstärkezone für eine vorgebbare Verweildauer positioniert wird und eine zweite Feldstärkezone lediglich überstreicht oder aber auch darin für eine vorgebbare Verweildauer positioniert wird.

Die zumindest eine Positionsänderung des tragbaren Codegebers innerhalb des elektrischen Feldstärkebereichs oder innerhalb von zumindest zwei unterschiedlichen Feldstärkezonen wird in vorteilhafter Weise örtlich und/oder zeitlich vorgegeben. In bevorzugter Weise wird die örtlich und/oder zeitlich durchzuführende Positionsänderung des tragbaren Codegebers optisch und/oder akustisch und/oder haptisch angezeigt. In besonders vorteilhafter Weise wird die örtlich und/oder zeitlich durchzuführende Positionsänderung durch den tragbaren Codegeber und/oder durch zumindest eine Einheit des Kraftfahrzeugs optisch und/oder akustisch und/oder haptisch angezeigt. Die zumindest eine Positionsänderung des tragbaren Codegebers innerhalb des elektrischen Feldstärkebereichs wird in bevorzugter Weise automatisch gesteuert vorgegeben. Dem Fahrzeugnutzer, welcher den tragbaren Codegeber mit sich führt, kann somit in eindeutiger und zuverlässiger Weise automatisch vorgegeben werden, welche Vorgehensweise er durchzuführen hat, um ein automatisches Öffnen eines Elements des Kraftfahrzeugs bewirken zu können. Indem die durchzuführende örtliche und/oder zeitliche Positionsänderung des tragbaren Codegebers für den Fahrzeugnutzer kenntlich gemacht wird, kann das erwünschte automatische Öffnen des Elements schnell und aufwandsarm bewältigt werden. Der Fahrzeugnutzer wird dabei quasi automatisch geführt, um die erforderlichen Kriterien, welche das automatische Öffnen eines Elements bewirken, in richtiger Weise durchzuführen.

Vorzugsweise wird von der Sende-/Empfangseinheit ein Mittelwert der empfangenen elektrischen Feldstärke der von dem tragbaren Codegeber gesendeten und von der Sende-/Empfangseinheit empfangenen Signale gebildet und bei einer Unveränderlichkeit des Mittelwerts in der vorgebbaren Zeitdauer die Unveränderlichkeit der Position des tragbaren Codegebers erkannt. Erfolgt somit innerhalb der vorgebbaren Zeitdauer keine Veränderung des Mittelwerts oder lediglich eine Veränderung des Mittelwerts innerhalb eines vorgebbaren Toleranzintervalls, so wird auch hier erkannt, dass das Element des Kraftfahrzeugs automatisch geöffnet werden soll. Vorzugsweise beträgt die vorgebbare Zeitdauer zwischen 0,5 Sekunden und 4 Sekunden, insbesondere zwischen 1 Sekunde und 2 Sekunden.

Es kann auch vorgesehen sein, dass eine Sende-/Empfangseinheit des tragbaren Codegebers zum Auswerten der elektrischen Feldstärke der von einer Sende-/Empfangseinheit des Fahrzeugs ausgesendeten Signale ausgebildet ist. Bevorzugt ist dies die Sende-/Empfangseinheit des Fahrzeugs, welche den elektrischen Feldstärkebereich um das automatisch zu öffnende Element erzeugt. Eine Mittelwertbildung der empfangenen Feldstärke kann dann im tragbaren Codegeber erfolgen. Wird dann gemäß oben ausgeführter Erläuterung für die vorgebbare Zeitdauer keine Veränderung des Mittelwerts erkannt oder lediglich eine Veränderung innerhalb des Toleranzintervalls festgestellt, so sendet der tragbare Codegeber ein Signal an das Fahrzeug, dass das Element automatisch geöffnet werden soll. Bei einer derartigen Ausgestaltung können herkömmliche Systeme einfach nachgerüstet werden.

Für die Unveränderlichkeit der Position des tragbaren Codegebers kann einerseits vorgesehen sein, dass sich der tragbare Codegeber praktisch positionsstabil in dem elektrischen Feldstärkebereich aufhält. Ebenso kann jedoch auch vorgesehen sein, dass für die Charakterisierung der Unveränderlichkeit der Position des tragbaren Codegebers eine relativ geringe Positionsveränderung des tragbaren Codegebers innerhalb des elektrischen Feldstärkebereichs vorliegt. Für eine derartige geringfügige Änderung kann beispielsweise vorgegeben werden, dass der tragbare Codegeber auch dann als positionsstabil und somit ohne Positionsänderung betrachtet wird, wenn er sich innerhalb der vorgebbaren Zeitdauer um eine Strecke kleiner 15 cm, insbesondere kleiner 10 cm und bevorzugterweise kleiner 5 cm, bewegt. Derartige Bewegungen werden dann auch im Hinblick auf die Mittelwertbildung des Feldstärkebereichs der von der Sende-/Empfangseinheit empfangenen Signale des tragbaren Codegebers entsprechend ermittelt und eine entsprechende Nicht-Veränderung der Position des tragbaren Codegebers in dem elektrischen Feldstärkebereich erfasst.

Die Berechtigungsprüfung, ob der tragbare Codegeber zum Zugang zum Kraftfahrzeug berechtigt, wird in vorteilhafter Weise vor dem Überprüfen einer für das automatische Öffnen des Elements durchzuführenden Positionsänderung durchgeführt. Diese Berechtigungsüberprüfung wird insbesondere durch die Sende-/Empfangseinheit durchgeführt und überwacht. In vorteilhafter Weise kann somit erreicht werden, dass keine unzulässige Anforderung zum automatischen Öffnen eines Elements getätigt werden kann und kein unberechtigtes Öffnen des Elements ermöglicht wird. Darüber hinaus kann somit verhindert werden, dass zunächst das Durchführen und Überwachen der für das automatische Öffnen eines Elements erforderlichen Kriterien erfolgt und erst im Nachhinein festgestellt wird, dass der tragbare Codegeber nicht zum Zugang zum Kraftfahrzeug berechtigt und somit die vorab durchgeführte Überprüfung der Kriterien, die das automatische Öffnen des Elements ermöglichen sollen, umsonst waren. Das gesamte Verfahren kann somit effektiv und effizient gestaltet werden.

Der durch die Sende-/Empfangseinheit zu erzeugende elektrische Feldstärkebereich um den Bereich des Elements des Kraftfahrzeugs wird in vorteilhafter Weise in einem derartigen Zeitraum erzeugt, welcher vom Zeitpunkt des Erkennens eines zum Zugang zum Kraftfahrzeug berechtigenden tragbaren Codegebers, bis zumindest zu dem Zeitpunkt, zu dem das Element öffnet, reicht. Es kann dadurch verhindert werden, dass der elektrische Feldstärkebereich über eine nicht erforderliche lange Zeitdauer erzeugt wird. Indem der elektrische Feldstärkebereich somit zeitoptimiert bereitgestellt wird, kann auch die Fahrzeugbatterie entlastet werden.

In vorteilhafter Weise wird nachfolgend auf das Erkennen eines zum Zugang zum Kraftfahrzeug berechtigenden tragbaren Codegebers überwacht, wann der tragbare Codegeber in den elektrischen Feldstärkebereich befördert wird. Bevorzugt wird, nachdem der tragbare Codegeber in den elektrischen Feldstärkebereich befördert wurde, ein periodisches Messen der elektrischen Feldstärke der vom tragbaren Codegeber ausgesandten elektrischen Signale durchgeführt. Dadurch wird ein sehr exaktes Überwachen der Kriterien, mit denen ein automatisches Öffnen des Elements des Kraftfahrzeugs ermöglicht werden kann, gewährleistet.

In vorteilhafter Weise ist das automatisch zu öffnende Element als Heckklappe oder als Kraftfahrzeugtür ausgebildet. Prinzipiell sind jedoch auch alle anderen bewegbar am Kraftfahrzeug angeordnete Teile, welche generell auch mittels drahtlosen Systemen geöffnet werden können oder könnten, mittels der Erfindung zu betätigen, insbesondere zu öffnen. Beispielsweise können auch Tankdeckel oder dergleichen derartig geöffnet werden.

Vorzugsweise wird abhängig von der Positionsveränderung des tragbaren Codegebers oder abhängig von dem Unverändern der Position des tragbaren Codegebers in dem elektrischen Feldstärkebereich ein Schließzustand von zumindest einer weiteren Komponente des Fahrzeugs verändert. So kann beispielsweise vorgesehen sein, dass dann, wenn der tragbare Codegeber für eine vorgebbare Zeitdauer in dem elektrischen Feldstärkebereich still steht und somit seine Position nicht verändert, der Schließzustand von zumindest einer Fahrzeugtüre des Fahrzeugs verändert wird. Die Veränderung des Schließzustands kann optisch und/oder akustisch angezeigt werden, indem beispielsweise eine Lichteinheit des Fahrzeugs zumindest einmal aufblinkt und/oder ein Signalton erzeugt wird.

Das Fahrzeug kann einen ersten Schließzustand aufweisen, welcher dadurch gekennzeichnet ist, dass eine Fahrzeugtüre sowohl von außen als auch von innen geöffnet werden kann. Darüber hinaus kann das Fahrzeug einen zweiten Schließzustand aufweisen, welcher dadurch gekennzeichnet ist, dass eine Fahrzeugtüre weder von außen noch von innen geöffnet werden kann. Des Weiteren kann das Fahrzeug einen dritten Schließzustand aufweisen, welcher das Öffnen einer Fahrzeugtüre von innen erlaubt, aber das Öffnen dieser Fahrzeugtüre von außen nicht möglich ist. Vorzugsweise kann nun vorgesehen sein, dass dann, wenn der tragbare Codegeber in den Feldstärkebereich zum automatischen Öffnen des Elements des Fahrzeugs gebracht wird, der zweite Schließzustand der weiteren Komponente, insbesondere einer Fahrzeugtüre, in den dritten Schließzustand verändert wird. Es kann dadurch erreicht werden, dass ohne ein aktives Betätigen des tragbaren Codegebers somit allein durch das positionsveränderliche Einbringen oder ein Stillstehen des tragbaren Codegebers in den elektrischen Feldstärkebereich der Schließzustand einer weiteren Komponente des Fahrzeugs beeinflusst werden kann.

Vorzugsweise wird abhängig von dem Ändern des Schließzustands der weiteren Komponente ein Betriebszustand einer Diebstahlwarnanlage des Fahrzeugs verändert. Dadurch kann beispielsweise ein unbeabsichtigtes und ungewolltes Starten der Diebstahlwarnanlage verhindert werden.

Auch dann, wenn der elektrische Feldstärkebereich zumindest zwei unterschiedliche Feldstärkezonen aufweist, kann ein automatisches Öffnen des Elements des Kraftfahrzeugs dann erfolgen, wenn der tragbare Codegeber für die vorgebbare Zeitdauer in einem dieser zumindest zwei unterschiedlichen Feldstärkezonen ohne Positionsveränderung verweilt. Es kann auch vorgesehen sein, dass bei einer derartigen Mehrzahl an unterschiedlichen Feldstärkezonen vorgegeben wird, in welcher dieser Feldstärkezonen sich der tragbare Codegeber für eine vorgebbare Zeitdauer im Stillstand befinden muss, um ein automatisches Öffnen des Elements erreichen zu können.

Ein Ausführungsbeispiel der Erfindung wird nachfolgend anhand schematischer Zeichnungen näher erläutert. Es zeigen:
- Fig. 1: eine schematische Darstellung eines Heckbereichs eines Kraftfahrzeugs mit einem Feldstärkeverlauf in Abhängigkeit vom Abstand vom Heckbereich des Kraftfahrzeugs, welcher durch eine im Heckbereich des Kraftfahrzeugs angeordnete Antenne erzeugt wird;
- Fig. 2: eine schematische Draufsichtdarstellung, welche eine erste Situation des erfindungsgemäßes Verfahrens zeigt;
- Fig. 3: eine weitere Draufsichtdarstellung auf einen Teilbereich eines Kraftfahrzeugs, welche eine zweite Situation des erfindungsgemäßen Verfahrens zeigt;
- Fig. 4: eine dritte Draufsichtdarstellung auf einen Teilbereich eines Kraftfahrzeugs, welches eine dritte Situation eines erfindungsgemäßen Verfahrens zeigt;
- Fig. 5: eine vierte Draufsichtdarstellung auf einen Teilbereich eines Kraftfahrzeugs, welche eine vierte Situation des erfindungsgemäßen Verfahrens zeigt; und
- Fig. 6: eine fünfte Draufsichtdarstellung auf einen Teilbereich eines Kraftfahrzeugs, welche eine fünfte Situation des erfindungsgemäßen Verfahrens zeigt.

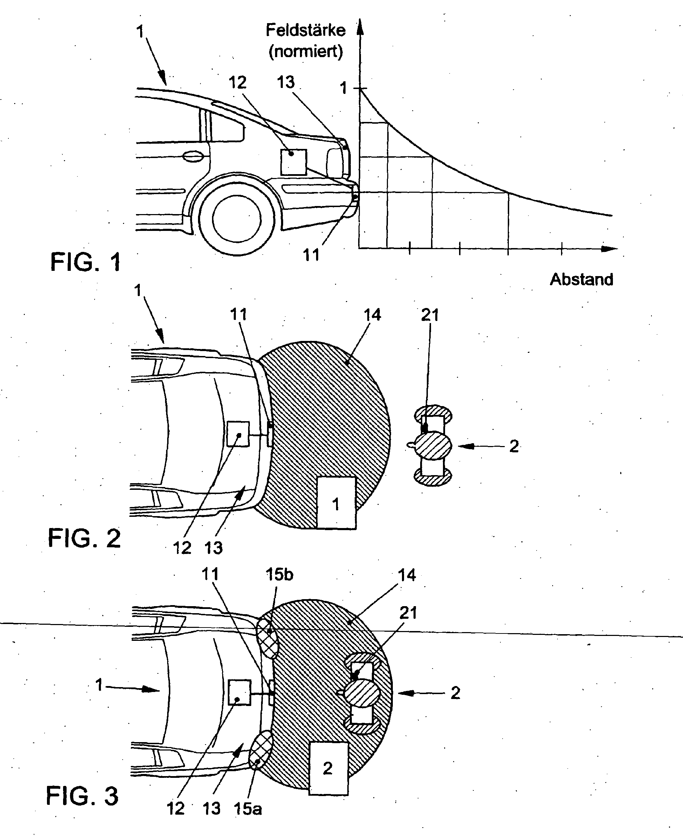

In den Fig. 1 bis 6 werden gleiche oder funktionsgleiche Elemente oder Bereiche mit gleichen Bezugszeichen versehen.

In Fig. 1 ist eine schematische Darstellung eines Heckbereichs eines Kraftfahrzeugs 1 gezeigt. Das Kraftfahrzeug 1 weist eine Sende-/Empfangseinheit auf, welche im Ausführungsbeispiel eine im Stoßfänger des Heckbereichs angeordnete Antenne 11 und eine mit der Antenne 11 elektrische verbundene Steuereinheit 12 aufweist. Sowohl die Antenne 11 als auch die Steuereinheit 12 sind lediglich beispielhaft an den gezeigten Positionen angeordnet und können in vielfältiger Weise auch an anderen Positionen im Kraftfahrzeug 1 angeordnet sein. Die Antenne 11 kann dabei im Bereich einer Heckklappe 13 oder aber auch im Bereich einer nicht dargestellten Heckscheibe des Kraftfahrzeugs 1 angeordnet sein. Das Kraftfahrzeug 1 weist im Ausführungsbeispiel ein schlüsselloses Zugangssystem (Keyless-Entry-System) auf. Die Antenne 11 ist im Ausführungsbeispiel derart ausgebildet, dass sie um den Heckbereich einen elektrischen Feldstärkebereich 14 erzeugen kann, welcher mindestens bis zu einem Meter Abstand, insbesondere bis zu 1,5 Meter Abstand, insbesondere bis zu 3 Meter Abstand und mehr, um den Heckbereich des Kraftfahrzeugs 1 reichen kann. Der durch die Antenne 11 erzeugbare elektrische Feldstärkebereich 14 weist Feldstärkewerte auf, welche in Fig. 1 in Abhängigkeit des Abstands vom Heckbereich des Kraftfahrzeugs 1, insbesondere von der Antenne 11 dargestellt ist. Die auf der vertikalen Achse des Diagramms aufgetragenen Feldstärkewerte sind dabei in normierter Darstellung gezeigt. Die durch diese Antenne 11 erzeugte Feldstärke kann mittels einer RSSI (Receiver Signal Strength Indicator)-Messung in einem tragbaren Codegeber 21 ermittelt werden.

In Fig. 2 ist eine Draufsichtdarstellung auf das Kraftfahrzeug 1 im Heckbereich gezeigt, wobei dabei eine erste Momentaufnahme des erfindungsgemäßen Verfahrens schematisch dargestellt ist. Wie Fig. 2 zeigt, nähert sich ein Fahrzeugnutzer 2 dem Heckbereich des Kraftfahrzeugs 1. Der Fahrzeugnutzer 2 führt einen tragbaren Codegeber 21 mit sich. Dieser kann beispielsweise in einer Hosentasche oder in einer Jackentasche des Fahrzeugnutzers 2 eingesteckt sein. Im Ausführungsbeispiel trägt der Fahrzeugnutzer 2 an beiden Händen Gegenstände, so dass es ihm nicht möglich ist ein aktives Öffnen der Heckklappe 13 mit zumindest einer Hand oder ein Betätigen eines elektronischen Öffnungsmechanismus mit zumindest einer Hand durchzuführen. Damit das Kraftfahrzeug 1 quasi erkennt, ob sich der Fahrzeugnutzer 2 bzw. insbesondere der tragbare Codegeber 21 dem Heckbereich des Kraftfahrzeugs 1 genähert hat, muss eine erste Erkennungsüberprüfung durchgeführt werden. Dabei wird durch die Steuereinheit 12 über die Antenne 11 ein elektrisches Signal ausgesendet, welches eine Berechtigungsanfrage dahingehend einleitet, inwieweit der tragbare Codegeber 21 den Fahrzeugnutzer zum Zugang des Kraftfahrzeugs 1 berechtigt. Dazu wird im Ausführungsbeispiel ein elektrisches Signal über die Antenne 11 ausgesendet, wobei die Signalstärke dabei derartig gewählt ist, dass sie eine kleinstmögliche dahingehend darstellt, welche ausreicht, damit der tragbare Codegeber 21 vom deaktivierten Modus oder Stand-by-Modus in einen aktiven Modus wechselt. Um eine Batterie des Kraftfahrzeugs zu entlasten, scannt die Steuereinheit 12 über die Antenne 11 den Heckbereich des Kraftfahrzeugs 1 in periodischer Weise ab. Dabei kann ein derartiges periodisches Scannen des Heckbereichs beispielsweise einmal pro Sekunde nach dem letzten Verriegeln der Heckklappe 13 oder des Kraftfahrzeugs 1 erfolgen. Es kann jedoch auch vorgesehen sein, dass ein derartiges periodisches Scannen bis hin zu Intervallen von zwei Tagen reichen kann, in denen zwei aufeinanderfolgende Scannvorgänge nach dem letzten Verriegeln durchgeführt werden. Wurde bei einem derartigen periodischen Scannen kein oder kein zum Zugang zum Kraftfahrzeug 1 berechtigender tragbarer Codegeber 21 detektiert, wird nachfolgend der Heckbereich nicht mehr gescannt und die Sensorik deaktiviert. Wird ein zum Zugang berechtigender-tragbarer Codegeber 21 erkannt, wird über die Antenne 11 ein elektrischer Feldstärkebereich 14 um den Heckbereich des Kraftfahrzeugs 1 erzeugt.

In Fig. 3 ist eine weitere Draufsichtdarstellung auf den Heckbereich des Kraftfahrzeugs 1 gezeigt, wobei dabei eine weitere Momentaufnahme des erfindungsgemäßen Verfahrens dargestellt ist. Nachfolgend auf die in Fig. 2 dargestellte erste Momentaufnahme des erfindungsgemäßen Verfahrens bewegt sich der Fahrzeugnutzer 2 in den elektrischen Feldstärkebereich 14, welcher durch die Antenne 11 erzeugt wurde. Dabei wird auch der tragbare Codegeber 21 in den elektrischen Feldstärkebereich 14 befördert. Indem ein ständiger Signalaustausch zwischen der Steuereinheit 12 und dem tragbaren Codegeber 21 über die Antenne 11 erfolgt, erkennt die Steuereinheit 12, dass sich der tragbare Codegeber 21 in dem elektrischen Feldstärkebereich 14 befindet bzw. in diesen eingetreten ist und betätigt im Ausführungsbeispiel die rückwärtigen Richtungsblinker 15a und 15b, um dem Fahrzeugnutzer 2 optisch anzuzeigen, dass der elektrische Feldstärkebereich 14 betreten wurde, insbesondere der tragbare Codegeber 21 in diesen elektrischen Feldstärkebereich 14 befördert wurde. Ab diesem Zeitpunkt, zudem erkannt wurde, dass der tragbare Codegeber 21 in den elektrischen Feldstärkebereich 14 befördert wurde, beginnt die Steuereinheit 14 über den tragbaren Codegeber 21 in periodischen Zeitabständen, beispielsweise alle 100 ms, die elektrische Feldstärke der durch den tragbaren Codegeber 21 ausgesandten elektrischen Signale zu messen.

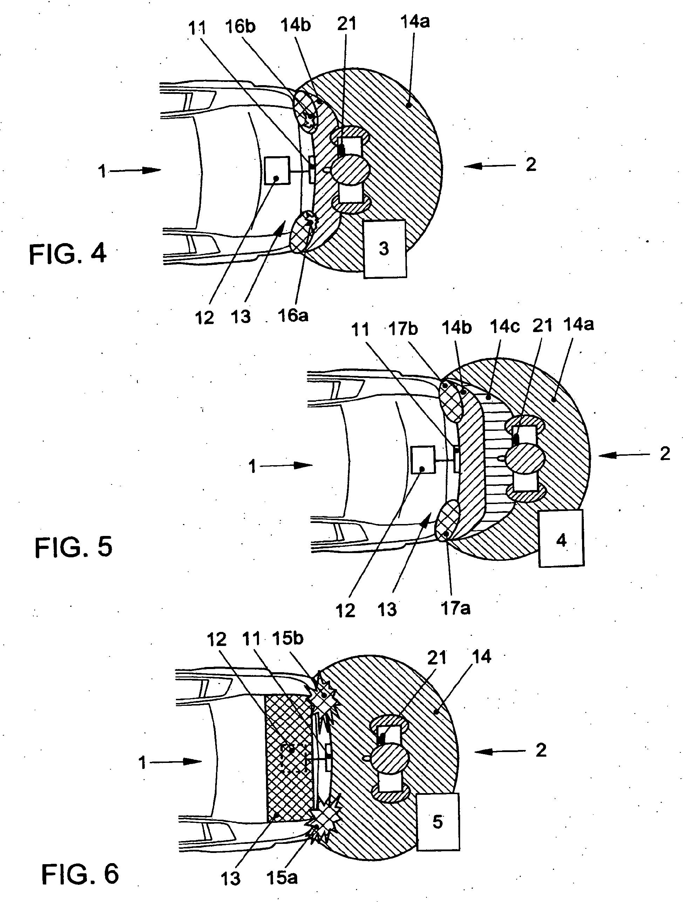

In Fig. 4 ist eine weitere Draufsichtdarstellung auf den Heckbereich des Kraftfahrzeugs 1 gezeigt, welche eine auf die in Fig. 4 gezeigte nachfolgende Momentaufnahme des erfindungsgemäßen Verfahrens zeigt. Im Vergleich zur Darstellung in Fig. 3 hat sich der Fahrzeugnutzer 2 noch näher zum Heckbereich des Kraftfahrzeugs 1 bewegt. Wie in der Darstellung gemäß Fig. 4 in genauerer Weise eingezeichnet, ist der elektrische Feldstärkebereich 14 in zwei benachbarte unterschiedliche Feldstärkezonen 14a und 14b aufgeteilt. Wie aus der Darstellung in Fig. 4 zu erkennen ist, stellt die erste elektrische Feldstärkezone 14a denjenigen Feldstärkebereich dar, welcher die äußeren Grenzen des elektrischen Feldstärkebereichs 14 darstellt. Die zweite elektrische Feldstärkezone 14b ist in der gezeigten Darstellung gemäß Fig. 4 unmittelbar angrenzend an den Heckbereich des Kraftfahrzeugs 1 bzw. insbesondere an die Antenne 11 angrenzend und auf der dem Heckbereich des Kraftfahrzeugs 1 abgewandten Seite von der ersten Feldstärkezone 14a umgeben. Sowohl die erste Feldstärkezone 14a als auch die zweite Feldstärkezone 14b werden dabei durch Feldstärkeintervalle gebildet, welche jeweils von einem oberen und einem unteren, das jeweilige Feldstärkeintervall begrenzenden Feldstärkewert, begrenzt werden. Wie in der gezeigten Darstellung in Fig. 4 zu erkennen ist, ist der tragbare Codegeber 21 nunmehr innerhalb der zweiten Feldstärkezone 14b, wobei dies auch über die Antenne 11 durch die Steuereinheit 12 detektiert wird. Neben den in Fig. 2 und Fig. 3 gezeigten Positionsänderungen des tragbaren Codegebers 21 ist auch die in Fig. 4 gezeigte Positionsänderung des tragbaren Codegebers 21 in die zweite Feldstärkezone 14b ein vorgegebenes Kriterium, um ein automatisches Öffnen der Heckklappe 13 bewirken zu können. Dem Fahrzeugnutzer 2 werden wie bisher geschildert die nachfolgend zu erfüllenden Kriterien gemäß den Darstellungen in Fig. 2 bis 4 in der entsprechend durchzuführenden Reihenfolge automatisch über die Steuereinheit 12 gesteuert vorgegeben und im bisherigen Verlauf optisch angezeigt.

Nachdem gemäß Fig. 4 das korrekte Befördern des tragbaren Codegebers 21 in die zweite Feldstärkezone 14b erfolgt ist und durch die Steuereinheit 12 detektiert wurde wird angezeigt, dass ein weiteres Kriterium, welches für das automatische Öffnen der Heckklappe 13 erforderlich ist, durchzuführen ist. Dabei wird im gezeigten Ausführungsbeispiel dem Fahrzeugnutzer 2 durch Leuchten oder Blinken der Rückfahrlichter 16a und 16b optisch angezeigt, dass er sich nunmehr wiederum vom Heckbereich des Kraftfahrzeugs 1 entfernen soll. Es kann vorgesehen sein, dass sich die Frequenz, mit welcher die Rückfahrlichter 15a und 15b aufleuchten bzw. blinken, abhängig vom Abstand des Fahrzeugnutzers 2 bzw. insbesondere des tragbaren Codegebers 21 ändert..

In Fig. 5 ist eine weitere Draufsichtdarstellung auf den Heckbereich des Kraftfahrzeugs 1 in einer auf die in Fig. 4 dargestellte Momentaufnahme folgende Momentaufnahme des erfindungsgemäßen Verfahrens gezeigt. Wie dabei zu erkennen ist, hat sich der Fahrzeugnutzer 2 gemäß der in Fig. 4 durch das Blinken der Rücklichter 16a und 16b angedeuteten Aufforderung vom Heckbereich des Kraftfahrzeugs 1 ein wenig entfernt, wobei zu erkennen ist, dass sich nunmehr der tragbare Codegeber 21 in einer dritten Feldstärkezone 14c befindet, welche zwischen der ersten Feldstärkezone 14a und der zweiten Feldstärkezone 14b ausgebildet ist. Auch diese Positionsänderung des tragbaren Codegebers 21 wird von der Steuereinheit 12 über die Antenne 11 detektiert und erkannt, dass der tragbare Codegeber 21 das weitere Kriterium, welches zum Öffnen der Heckklappe 13 erforderlich ist, erfüllt hat. Gemäß einem weiteren Kriterium zum automatischen Öffnen der Heckklappe 13 ist es im Ausführungsbeispiel nunmehr erforderlich, dass der tragbare Codegeber 21 für eine vorgegebene Zeitdauer in dieser dritten Feldstärkezone verweilt. Im Ausführungsbeispiel ist es dabei vorgesehen, dass sich der tragbare Codegeber 21 für 2 Sekunden in dieser dritten Feldstärkezone 14c befindet.

Bei der Positionsänderung des tragbaren Codegebers 21 von der zweiten Feldstärkezone 14b in die dritte Feldstärkezone 14c wird dem Fahrzeugnutzer 2 wiederum durch ein optisches Signal angezeigt, wann er bzw. der tragbare Codegeber 21 in diese dritte Feldstärkezone 14c eingetreten ist. Im Ausführungsbeispiel leuchten dabei die Bremslichter 17a und 17b auf.

Es kann auch vorgesehen sein, dass die örtlichen und/oder zeitlichen Positionsänderungen des tragbaren Codegebers 21 zum Erfüllen der für das automatische Öffnen der Heckklappe 13 erforderlichen Kriterien alternativ oder ergänzend zu der optischen Anzeige auch akustisch und/oder haptisch angezeigt werden. Es kann dabei vorgesehen sein, dass beispielsweise auch ein Pfeif- oder Hupton kurzzeitig erzeugt wird. Ebenso kann vorgesehen sein, dass zumindest bei einigen der durchzuführenden und korrekt durchgeführten Positionsänderungen der tragbare Codegeber 21 vibriert.

In Fig. 6 ist eine weitere Draufsichtdarstellung auf den Heckbereich des Kraftfahrzeugs 1 gezeigt, bei dem nun die Heckklappe 13 automatisch geöffnet wird. Das automatische Öffnen kann dabei elektrisch oder per mechanischer Vorspannung erfolgen. Es kann vorgesehen sein, dass dieses korrekte automatische Öffnen abschließend wiederum durch optische Signale, beispielsweise einem Blinken der rückwärtigen Richtungsblinker 15a und 15b angezeigt wird. Die unterschiedlichen Feldstärkezonen 14a bis 14c können bereits zu dem Zeitpunkt erzeugt werden, welcher in Fig. 2 dargestellt ist und fortwährend bis zum Zeitpunkt, welcher in Fig. 5 dargestellt ist, erzeugt werden. Es kann jedoch auch vorgesehen sein, wie dies in den Darstellungen in Fig. 2 bis Fig. 6 gezeigt ist, dass die entsprechenden Feldstärkezonen 14a bis 14c zeitlich immer erst dann erzeugt werden, wenn sie für das Erfüllen eines nachfolgenden Kriteriums zum automatischen Öffnen der Heckklappe 13 erforderlich sind.

Die in den Fig. 2 bis Fig. 6 gezeigten Ausführungen des erfindungsgemäßen Verfahrens bzw. die darin gezeigten Momentaufnahmen sind lediglich beispielhaft und können in beliebiger Weise variiert werden. Wesentlich ist, dass die Position des tragbaren Codegebers 21 im Heckbereich des Kraftfahrzeugs 1 so ausgewertet wird, dass erkannt wird, ob ein Wunsch zum automatischen Öffnen der Heckklappe 13 vorliegt oder nicht. In vorteilhafter Weise wird dazu der Heckbereich des Kraftfahrzeugs 1 in unterschiedliche Feldstärkezonen unterteilt, die der tragbare Codegeber 21 in vorgebbarer Reihenfolge durchschreiten muss, um dem Kraftfahrzeug 1, insbesondere der Sende-/ Empfangseinheit 11, 12 mitzuteilen, dass die Heckklappe 13 zu öffnen ist.

Das in den Fig. 2 bis Fig. 6 erläuterte Vorgehen zum Öffnen eines Elements eines Fahrzeugs 1 kann auch derart erfolgen, dass der tragbare Codegeber 21 in den Feldstärkebereich 14 gebracht wird und dann dort für eine vorgebbare Zeitdauer, welche im Ausführungsbeispiel 2 Sekunden beträgt, im Wesentlichen still steht und somit keine Positionsveränderung durchführt. Die vom Codegeber 21 gesendeten Signale werden dann von der Sende-/Empfangseinheit 11, 12 empfangen und eine Mittelwertbildung der Feldstärkewerte dieser empfangenen Signale durchgeführt. Ändert sich dieser Mittelwert in der vorgebbaren Zeitdauer von 2 Sekunden nicht oder nur innerhalb eines vorgebbare Toleranzintervalls, so wird erkannt, dass der tragbare Codegeber 21 innerhalb des Feldstärkebereichs 14 keine Positionsänderung durchgeführt hat und somit das Kriterium zum automatischen Öffnen des Elements, im Ausführungsbeispiel die Heckklappe 13, erfüllt ist. Der Feldstärkebereich 14 ist bei einer derartigen Ausführung bevorzugt lediglich als eine Feldstärkezone ausgebildet. Es kann jedoch auch eine Unterteilung des Feldstärkebereichs 14 in zumindest zwei Feldstärkezonen vorgesehen sein. Es kann auch vorgesehen sein, das dieses zeitliche Verweilen des tragbaren Codegebers 21 in dem Feldstärkebereich 14 ohne eine Positionsänderung zusätzlich in einem vorgebbaren örtlichen Bereichs innerhalb des Feldstärkebereichs 14 erfolgen muss, um das Kriterium des automatischen Öffnens zu erfüllen.

### Bezugszeichenliste

- 1: Kraftfahrzeug
- 2: Fahrzeugnutzer
- 11: Antenne
- 12: Steuereinheit
- 13: Heckklappe
- 14a, b, c: Feldstärkezonen
- 15a, b: Richtungsblinker
- 16a, b: Rücklichter
- 17a, b: Bremslichter
- 21: Codegeber

## Patentansprüche

1. Verfahren zum automatischen Öffnen eines Elements (13) eines Kraftfahrzeugs (1), bei dem eine Zugangskontrolle zum Kraftfahrzeug (1) drahtlos zwischen einem tragbaren Codegeber (21) und einer Sende-/Empfangseinheit (11, 12) im Kraftfahrzeug (1) durchgeführt wird, **dadurch gekennzeichnet, dass** ein elektrischer Feldstärkebereich (14, 14a, 14b, 14c) um den Bereich des Elements (13) des Kraftfahrzeugs (1) zumindest während des Vorgangs zum automatischen Öffnen des Elements (13) erzeugt wird, wobei das Element (13) dann automatisch geöffnet wird, wenn der zum Zugang zum Kraftfahrzeug (1) berechtigende tragbare Codegeber (21) zumindest zeitweise in den elektrischen Feldstärkebereich (14, 14a, 14b, 14c) befördert wird und der tragbare Codegeber (21) zumindest eine zum automatischen Öffnen des Elements (13) berechtigende vorgebbare Positionsänderung durchführt oder der tragbare Codegeber (21) für eine vorgebbare Zeitdauer in dem elektrischen Feldstärkenbereich (14, 14a, 14b, 14c) verweilt, ohne seine Position zu verändern, wobei die Positionsänderung oder das Unverändern der Position des tragbaren Codegebers (21) durch die Sende-/Empfangseinheit (11, 12) detektiert wird.

2. Verfahren nach Anspruch 1, **dadurch gekennzeichnet, dass** der elektrische Feldstärkebereich (14, 14a, 14b, 14c) in zumindest zwei unterschiedliche Feldstärkezonen (14a, 14b, 14c) aufgeteilt wird, wobei der tragbare Codegeber (21) zum berechtigenden automatischen Öffnen des Elements (13) in jeder der zumindest zwei Feldstärkezonen (14a, 14b, 14c) positioniert wird.

3. Verfahren nach Anspruch 2, **dadurch gekennzeichnet, dass** die Reihenfolge, in der der tragbare Codegeber (21) in den zumindest zwei unterschiedlichen Feldstärkezonen (14a, 14b, 14c) positioniert wird, vorgegeben wird.

4. Verfahren nach einem der vorhergehenden Ansprüche, **dadurch gekennzeichnet, dass** das automatische Öffnen des Elements (13) abhängig von einer vorgebbaren Verweildauer des tragbaren Codegebers (21) innerhalb des elektrischen Feldstärkebereichs (14, 14a, 14b, 14c) durchgeführt wird.

5. Verfahren nach einem der vorhergehenden Ansprüche, **dadurch gekennzeichnet, dass** die zumindest eine Positionsänderung des tragbaren Codegebers (21) innerhalb des elektrischen Feldstärkebereichs (14, 14a, 14b, 14c) zum automatischen Öffnen des Elements (13) örtlich und/oder zeitlich vorgegeben wird.

6. Verfahren nach Anspruch 5, **dadurch gekennzeichnet, dass** die örtlich und/oder zeitlich durchzuführende Positionsänderung optisch und/oder akustisch und/oder haptisch angezeigt wird.

7. Verfahren nach Anspruch 6, **dadurch gekennzeichnet, dass** die örtlich und/oder zeitlich durchzuführende Positionsänderung durch den tragbaren Codegeber (21) und/oder durch zumindest eine im Kraftfahrzeug angeordnete Einheit (15a, 15b; 16a, 16b; 17a, 17b) optisch und/oder akustisch und/oder haptisch angezeigt wird.

8. Verfahren nach Anspruch 1, **dadurch gekennzeichnet, dass** von der Sende-/Empfangseinheit (11, 12) ein Mittelwert der empfangenen elektrischen Feldstärken der von dem tragbaren Codegeber (21) gesendeten Signale gebildet wird und bei einem in der vorgebbaren Zeitdauer gleichbleibenden Mittelwert das Unverändern der Position des tragbaren Codegebers (21) erkannt wird.

9. Verfahren nach Anspruch 1 oder 8, **dadurch gekennzeichnet, dass** die vorgebbare Zeitdauer zwischen 0,5 s und 4s, insbesondere zwischen 1s und 2s, beträgt.

10. Verfahren nach einem der vorhergehenden Ansprüche, **dadurch gekennzeichnet, dass** eine Berechtigungsprüfung, ob der tragbare Codegeber (21) zum Zugang zum Kraftfahrzeug (1) berechtigt, vor dem Überprüfen einer für das automatische Öffnen des Elements (13) durchzuführenden Positionsänderung, insbesondere durch die Sende-/Empfarigseinheit (11, 12), durchgeführt wird.

11. Verfahren nach Anspruch 10, **dadurch gekennzeichnet, dass** der durch die Sende-/Empfangseinheit (11, 12) zu erzeugende elektrische Feldstärkebereich (14, 14a, 14b, 14c) um den Bereich des Elements (13) des Kraftfahrzeugs (1) in einem Zeitraum erzeugt wird, welcher vom Zeitpunkt des Erkennens eines zum Zugang zum Kraftfahrzeug (1) berechtigenden tragbaren Codegebers (21) bis zumindest zu dem Zeitpunkt, zu dem das Element (13) öffnet, reicht.

12. Verfahren nach Anspruch 10 oder 11, **dadurch gekennzeichnet, dass** nachfolgend auf das Erkennen eines zum Zugang zum Kraftfahrzeug (1) berechtigenden tragbaren Codegebers (21) überwacht wird, wann der tragbare Codegeber (21) in den elektrischen Feldstärkebereich (14, 14a, 14b, 14c) befördert wird.

13. Verfahren nach Anspruch 11, **dadurch gekennzeichnet, dass** nachdem der tragbare Codegeber (21) in den elektrischen Feldstärkebereich (14, 14a, 14b, 14c) befördert wurde, ein periodisches Messen der elektrischen Feldstärke der vom tragbaren Codegeber (21) ausgesandten elektrischen Signale durchgeführt wird.

14. Verfahren nach einem der vorhergehenden Ansprüche, **dadurch gekennzeichnet, dass** das Element als Heckklappe (13) ausgebildet ist und der elektrische Feldstärkebereich (14, 14a, 14b, 14c) im Heckbereich des Kraftfahrzeugs (1) erzeugt wird.

15. Verfahren nach einem der vorhergehenden Ansprüche, **dadurch gekennzeichnet, dass** abhängig von der Positionsveränderung des tragbaren Codegebers (21) oder dem Unverändern der Position des tragbaren Codegebers (21) in dem elektrischen Feldstärkebereich (14, 14a, 14b, 14c) ein Schließzustand von zumindest einer weiteren Komponente des Fahrzeugs verändert wird.

16. Verfahren nach Anspruch 15, **dadurch gekennzeichnet, dass** abhängig von dem Ändern des Schließzustands der weiteren Komponente ein Betriebszustand einer Diebstahlwarnanlage des Fahrzeugs verändert wird.

## Claims

1. Method for automatically opening an element (13) of a motor vehicle (1), in which method access control to the motor vehicle (1) is carried out in a wirefree fashion between a portable code transmitter (21) and a transceiver unit (11, 12) in the motor vehicle (1), **characterized in that** an electrical field strength area (14, 14a, 14b, 14c) around the area of the element (13) of the motor vehicle (1) is generated at least during the process of automatically opening the element (13), wherein the element (13) is opened automatically if the portable code transmitter (21) which provides authorization for access to the motor vehicle (1) is moved at least temporarily into the electrical field strength area (14, 14a, 14b, 14c), and the portable code transmitter (21) carries out at least one predefinable and/or predefined change in position which provides authorization for automatically opening the element (13) or the portable code transmitter (21) remains for a predefinable and/or predefined time period in the electrical field strength area (14, 14a, 14b, 14c) without changing its position, wherein the change in position of the portable code transmitter (21) or a failure of said portable code transmitter (21) to change position is detected by the transceiver unit (11, 12).

2. Method according to Claim 1, **characterized in that** the electrical field strength area (14, 14a, 14b, 14c) is divided into at least two different field strength zones (14a, 14b, 14c), wherein the portable code transmitter (21) which provides authorization for automatically opening the element (13) is positioned in each of the at least two field strength zones (14a, 14b, 14c).

3. Method according to Claim 2, **characterized in that** the sequence in which the portable code transmitter (21) is positioned in the at least two different field strength zones (14a, 14b, 14c) is predefined.

4. Method according to one of the preceding claims, **characterized in that** the automatic opening of the element (13) is carried out as a function of a predefinable and/or predefined residence time of the portable code transmitter (21) within the electrical field strength area (14, 14a, 14b, 14c).

5. Method according to one of the preceding claims, **characterized in that** the at least one change in position of the portable code transmitter (21) within the electrical field strength area (14, 14a, 14b, 14c) for the automatic opening of the element (13) is predefined in terms of location and/or time.

6. Method according to Claim 5, **characterized in that** the change-in position which is to be carried out in terms of location and/or time is indicated visually and/or acoustically and/or haptically.

7. Method according to Claim 6, **characterized in that** the change in position which is to be carried out in terms of location and/or time is indicated visually and/or acoustically and/or haptically by the portable code transmitter (21) and/or by means of at least one unit (15a, 15b; 16a, 16b; 17a, 17b) arranged in the motor vehicle.

8. Method according to Claim 1, **characterized in that** a mean value of the received electrical field strengths of the signals transmitted by the portable code transmitter (21) is formed by the transceiver unit (11, 12), and if there is a mean value which remains constant in the predefinable time period it is detected that the position of the portable code transmitter (21) does not change.

9. Method according to Claim 1 or 8, **characterized in that** the predefinable and/or predefined time period is between 0.5 s and 4 s, in particular between 1 s and 2 s.

10. Method according to one of the preceding claims, **characterized in that** authorization checking as to whether the portable code transmitter (21) is authorized to access the motor vehicle (1) is carried out before the checking of a change in position which is to be carried out for the automatic opening of the element (13), in particular by the transceiver unit (11, 12).

11. Method according to Claim 10, **characterized in that** the electrical field strength area (14, 14a, 14b, 14c) which is to be generated by the transceiver unit. (11, 12) around the area of the element (13) of the motor vehicle (1) is generated in a time period which extends from the time when a portable code transmitter (21) which authorizes access to the motor vehicle (1) is detected until at least the time at which the element (13) opens.

12. Method according to Claim 10 or 11, **characterized in that** subsequent to the detection of a portable code transmitter (21) which authorizes access to the motor vehicle (1), monitoring is carried out to determine when the portable code transmitter (21) is moved into the electrical field strength area (14, 14a, 14b, 14c).

13. Method according to Claim 11, **characterized in that** after the portable code transmitter (21) has been moved into the electrical field strength area (14, 14a, 14b, 14c), the electrical field strength of the electrical signals which are emitted by the portable code transmitter (21) is measured periodically.

14. Method according to one of the preceding claims, **characterized in that** the element is embodied as a tailgate (13) and the electrical field strength area (14, 14a, 14b, 14c), is generated in the rear area of the motor vehicle (1).

15. Method according to one of the preceding claims, **characterized in that** a closed state of at least, one further component of the vehicle is changed as a function of the change in position of the portable code transmitter (21) or the failure of the position of the portable code transmitter (21) to change in the electrical field strength area (14, 14a, 14b, 14c).

16. Method according to Claim 15; **characterized in that** an operating state of an anti-theft warning system of the vehicle is changed as a function of the changing of the closed state of the further component.

## Revendications

1. Procédé pour l'ouverture automatique d'un élément (13) d'un véhicule automobile (1), dans lequel une commande d'accès au véhicule automobile (1) est réalisée sans fil entre un générateur de code portable (21) et une unité émettrice/réceptrice (11, 12) dans le véhicule automobile (1), **caractérisé en ce qu'**une région d'intensité de champ électrique (14, 14a, 14b, 14c) est produite autour de la région de l'élément (13) du véhicule automobile (1) au moins pendant l'opération d'ouverture automatique de l'élément (13), l'élément (13) étant alors ouvert automatiquement lorsque le générateur de code portable (21) autorisant l'accès au véhicule automobile (1) est transporté au moins temporairement dans la région d'intensité de champ électrique (14, 14a, 14b, 14c) et le générateur de code portable (21) effectue au moins une modification de position pouvant être prédéfinie et autorisant l'ouverture automatique de l'élément (13), ou bien lorsque le générateur de code portable (21) reste pendant une durée prédéfinissable dans la région d'intensité de champ électrique (14, 14a, 14b, 14c), sans modifier sa position, la modification de position ou l'absence de modification de position du générateur de code portable (21) étant détectée par l'unité émettrice/réceptrice (11, 12).

2. Procédé selon la revendication 1, **caractérisé en ce que** la région d'intensité de champ électrique (14, 14a, 14b, 14c) est divisée en au moins deux zones d'intensité de champ différentes (14a, 14b, 14c), le générateur de code portable (21) étant positionné pour l'ouverture automatique autorisée de l'élément (13) dans chacune des au moins deux zones d'intensité de champ (14a, 14b, 14c).

3. Procédé selon la revendication 2, **caractérisé en ce que** la séquence suivant laquelle le générateur de code portable (21) est positionné dans les au moins deux zones d'intensité de champ différentes (14a, 14b, 14c) est prédéfinie.

4. Procédé selon l'une quelconque des revendications précédentes, **caractérisé en ce que** l'ouverture automatique de l'élément (13) est effectuée en fonction d'une durée de résidence prédéfinissable du générateur de code portable (21) à l'intérieur de la région d'intensité de champ électrique (14, 14a, 14b, 14c).

5. Procédé selon l'une quelconque des revendications précédentes, **caractérisé en ce que** l'au moins une modification de position du générateur de code portable (21) à l'intérieur de la région d'intensité de champ électrique (14, 14a, 14b, 14c) pour l'ouverture automatique de l'élément (13) est prédéfinie localement et/ou dans le temps.

6. Procédé selon la revendication 5, **caractérisé en ce que** la modification de position à effectuer localement et/ou dans le temps est indiquée de manière optique et/ou acoustique et/ou haptique.

7. Procédé selon la revendication 6, **caractérisé en ce que** la modification de position à effectuer localement et/ou dans le temps est indiquée de manière optique et/ou acoustique et/ou haptique par le générateur de code portable (21) et/ou par au moins une unité (15a, 15b ; 16a, 16b ; 17a, 17b) disposée dans le véhicule automobile.

8. Procédé selon la revendication 1, **caractérisé en ce qu'**une valeur moyenne des intensités de champ électrique reçues des signaux envoyés par le générateur de code portable (21) est créée par l'unité émettrice/réceptrice (11, 12) et l'absence de modification de la position du générateur de code portable (21) est détectée lorsqu'une valeur moyenne reste inchangée pendant la durée prédéfinissable.

9. Procédé selon la revendication 1 ou 8, **caractérisé en ce que** la durée prédéfinissable est comprise entre 0,5 s et 4 s, notamment entre 1 s et 2 s.

10. Procédé selon l'une quelconque des revendications précédentes, **caractérisé en ce qu'**un test d'autorisation est effectué, pour savoir si le générateur de code portable (21) autorise l'accès au véhicule automobile (1), avant la vérification d'une modification de position à effectuer pour l'ouverture automatique de l'élément (13), notamment par l'unité émettrice/réceptrice (11, 12).

11. Procédé selon la revendication 10, **caractérisé en ce que** la région d'intensité de champ électrique (14, 14a, 14b, 14c) à produire par l'unité émettrice/réceptrice (11, 12) autour de la région de l'élément (13) du véhicule automobile (1) est produite dans un intervalle de temps qui s'étend de l'instant de reconnaissance d'un générateur de code portable (21) autorisant l'accès au véhicule automobile (1) jusqu'à au moins l'instant auquel l'élément (13) s'ouvre.

12. Procédé selon la revendication 10 ou 11, **caractérisé en ce qu'**après la reconnaissance d'un générateur de code portable (21) autorisant l'accès au véhicule automobile (1), on contrôle quand le générateur de code portable (21) est transporté dans la région d'intensité de champ électrique (14, 14a, 14b, 14c).

13. Procédé selon la revendication 11, **caractérisé en ce qu'**après le transport du générateur de code portable (21) dans la région d'intensité de champ électrique (14, 14a, 14b, 14c), on effectue une mesure périodique de l'intensité de champ électrique des signaux électriques émis par le générateur de code portable (21).

14. Procédé selon l'une quelconque des revendications précédentes, **caractérisé en ce que** l'élément est réalisé sous forme de hayon arrière (13) et la région d'intensité de champ électrique (14, 14a, 14b, 14c) est produite dans la région arrière du véhicule automobile (1).

15. Procédé selon l'une quelconque des revendications précédentes, **caractérisé en ce qu'**un état de fermeture d'au moins un autre composant du véhicule est modifié en fonction de la modification de position du générateur de code portable (21) ou de l'absence de modification de la position du générateur de code portable (21) dans la région d'intensité de champ électrique (14, 14a, 14b, 14c).

16. Procédé selon la revendication 15, **caractérisé en ce qu'**en fonction de la modification de l'état de fermeture de l'autre composant, un état de fonctionnement d'une installation d'avertissement antivol du véhicule est modifié.
